# DEMANDE DE BREVET EUROPEEN

(11) **EP 1 465 311 A1**
(43) Date de publication de la demande: **06.10.2004**
(21) Numéro de dépôt: 04356043.2
(22) Date de dépôt: 01.04.2004
(51) Int. Cl.: H02G 3/32

(54) **Console de support de chemin de câbles**

(30) Priorité: 01.04.2003 FR 0304018
(71) Demandeur: Bailleux, Jacques, 21430 Bard Le Reugulier (FR)
(72) Inventeur: Bailleux, Jacques, 21430 Bard Le Reugulier (FR)
(74) Mandataire: Maureau, Philippe

(57) **Abrégé**

Cette console (1) de support de chemin de câbles (2), comprenant au moins une pièce, destinée à être fixée à la paroi à équiper, caractérisée en ce que la console comporte une partie de fixation (7) au mur ou sur un support, et au moins deux éléments de fixation (13, 17) d'un chemin de câble, chaque élément étant placé de manière à ce que sa distance par rapport à l'autre élément soit réglable, chaque élément comportant deux parties destinées respectivement à la fixation d'un fil longitudinal (5) du fond d'un chemin de câble filaire, et d'un chemin de câble en tôle ajourée après avoir traversé un trou (3a) de celui-ci.

## Description

La présente invention concerne une console de support de chemin de câbles.

Il est classique de fixer un chemin de câbles à une paroi au moyen de consoles fixées à cette paroi, recevant le chemin de câbles sur elles, des moyens étant prévus pour fixer le chemin de câbles à ces consoles.

Une console très couramment employée est réalisée en tôle pliée et comprend un élément de fixation à la paroi à équiper et un élément de réception du chemin de câbles. Les chemins de câbles pouvant avoir des largeurs très différentes selon le nombre de câbles à acheminer, l'utilisateur doit disposer de séries de consoles de différentes largeurs, adaptées à ces chemins de câbles, ce qui est une contrainte certaine, tant du point de vue de l'utilisation que du point vue des approvisionnements et de la gestion des stocks.

Pour remédier à cet inconvénient, il a été conçu de réaliser une console en deux pièces coulissantes l'une par rapport à l'autre ; une pièce est fixée à la paroi et l'autre peut être immobilisée par rapport à la première pièce dans une pluralité de positions, pour former une console de longueur variable, correspondant à la largeur du chemin de câbles à installer.

L'élément formant le chemin de câbles peut être réalisé de différentes manières. Un premier type de chemins de câbles connu est de type filaire, c'est-à-dire en treillis de fils métalliques. Le second type connu de chemins de câbles est du type en tôle ajourée, percée de trous de formes diverses, notamment allongées.

Du fait de la forme différente des chemins de câbles utilisés, les consoles de support de chemins de câbles connues sont spécifiquement adaptées au chemin de câble à installer. Certaines présentant des ergots pour recevoir les fils des chemins de câbles filaires, d'autres consoles étant dessinées différemment pour s'adapter aux trous des chemins de câbles en tôle ajourée, leur mode d'installation étant également différent.

Cette diversité pose un problème sur les chantiers, où les ouvriers doivent constamment vérifier quel type de chemin de câble sera utilisé avant de pouvoir poser le type de console de support approprié. Il en résulte une perte d'efficacité tout à fait dommageable.

La présente invention vise à remédier aux inconvénients mentionnés ci-dessus, en fournissant notamment une console universelle, c'est-à-dire utilisable de la même manière avec les principaux types de chemins de câbles connus, quelles que soient leurs dimensions.

La console qu'elle concerne comprend, de manière connue en soi, au moins une pièce, destinée à être fixée à la paroi à équiper.

L'invention est plus particulièrement caractérisée en ce que la console comporte une partie de fixation au mur ou sur un support, une partie de support de chemin de câble, et au moins deux éléments de fixation d'un chemin de câble, chaque élément étant placé de manière à ce que sa distance par rapport à l'autre élément soit réglable, chaque élément comportant deux parties destinées respectivement à la fixation d'un fil longitudinal d'un chemin de câble filaire, et d'un chemin de câble en tôle ajourée après avoir traversé un trou de celui-ci.

Avantageusement, chaque élément de fixation comporte deux ergots, l'un dirigé vers la paroi, l'autre orienté dans la direction opposée.

Pour des raisons de facilité de description, on définit dans la description qui suit comme ergots "extérieurs", les deux ergots situés le plus près et le plus éloigné de la paroi, et comme ergots "intérieurs", les ergots encadrés par les ergots extérieurs.

La fixation d'un chemin de câble filaire est possible en utilisant les ergots extérieurs, dont la taille et la forme sont adaptées à la section d'un fil du treillis. De même, la fixation d'un chemin de câble du type en tôle ajourée est également possible, sans modifier la console, par simple adaptation à la paire d'ergots intérieurs. Dans ce dernier cas, les ergots intérieurs sont de faible hauteur et profondeur afin de s'adapter facilement aux bords d'un trou du chemin de câbles en tôle ajourée.

Dans le cas d'un chemin de câble en treillis de fils, la fixation est réalisée par coulissement relatif des deux éléments de fixation, afin de réaliser l'éloignement des ergots correspondants l'un par rapport à l'autre, la désolidarisation du chemin de câble d'avec la console s'opérant de la manière inverse en rapprochant les ergots correspondants l'un de l'autre.

Dans le cas d'un chemin de câble en tôle ajourée, c'est le principe de fonctionnement inverse qui s'applique.

Les chemins de câbles sont habituellement réalisés de manière standardisée, en particulier en ce qui concerne les sections - ou diamètres - des fils, ainsi que l'épaisseur des tôles utilisés. Les fils étant de diamètre supérieur à l'épaisseur des tôles utilisées pour les chemins en tôle ajourée, les ergots utilisés respectivement pour l'un ou l'autre type de chemin de câble sont de tailles différentes. Les ergots destinés à la fixation de chemins de câble filaires sont plus hauts et plus profonds. Pour cette raison, ils ont logiquement été placés à l'extérieur, une position à l'intérieur de la zone de fixation ayant logiquement empêché la fixation des chemins de câbles en tôle ajourée.

Selon une variante d'exécution de l'invention, au moins un des éléments de fixation est mobile en translation et rotation par rapport à la console, ledit élément de fixation comportant un ergot vertical recourbé vers l'extérieur et propre à permettre la fixation d'un chemin de câbles en tôle ajourée par prise sur le bord d'un trou dudit chemin de câble en tôle ajourée situé sur une paroi latérale de ce dernier, et/ou ledit élément de fixation comportant un rebord vertical dirigé vers le bas muni d'au moins une encoche sur son bord inférieur, ladite encoche pouvant recevoir un fil du fond d'un chemin de câble filaire, pour fixation de ce dernier sur la console.

En outre, la partie de support de chemin de câble de la console comporte de préférence au moins une lumière allongée, disposée longitudinalement à la console, dans laquelle au moins un élément de fixation est monté de façon réglable.

Selon une première forme d'exécution de l'invention, la partie de support de chemin de câble de la console comporte deux parties coulissantes l'une par rapport à l'autre, chacune comprenant un élément de fixation.

Selon une seconde forme d'exécution de l'invention, les deux éléments de fixation sont montés de façon réglable dans ladite au moins une lumière allongée longitudinale.

Dans les deux cas, il est possible de régler la distance entre la paroi du mur et la paroi latérale la plus proche du chemin de câbles. Une telle flexibilité peut être importante, par exemple dans le cas où l'on désire intercaler un réseau de canalisations entre le mur et le chemin de câbles.

Selon une forme particulière d'exécution de l'invention, l'un des deux éléments est monté de façon solidaire ou fait partie intégrante de la console.

Avantageusement, la console peut comporter en outre un troisième élément - par exemple un crapaud ou clam -, mobile en translation et rotation par rapport à la console, ce troisième élément comportant un ergot vertical recourbé vers l'extérieur et propre à permettre la fixation d'un chemin de câbles en tôle ajourée par prise sur le bord d'un trou dudit chemin de câble en tôle ajourée situé sur une paroi latérale de ce dernier, et/ou ledit troisième élément comportant un rebord vertical dirigé vers le bas muni d'au moins une encoche sur son bord inférieur, ladite encoche pouvant recevoir un fil du fond d'un chemin de câble filaire, pour fixation de ce dernier sur la console.

Ce troisième élément permet, le cas échéant, de réaliser la fixation d'un chemin de câbles en tôle ajourée au niveau d'un trou d'une paroi latérale du chemin de câble en remplacement ou en supplément des points de fixation au niveau d'un trou du fond du chemin de câble. Une telle configuration peut être nécessaire en cas de difficulté d'accès ou d'obstacle à la fixation du chemin de câble au niveau du fond de ce dernier.

De manière similaire, les encoches situées sur le rebord vertical du troisième élément permettent d'offrir, le cas échéant, un point de fixation supplémentaire et particulièrement robuste, puisque le fil du chemin de câble est alors pincé entre le troisième élément et le rail sur lequel ce dernier est fixé.

Pour sa bonne compréhension, l'invention est à nouveau décrite ci-dessous en référence au dessin schématique annexé représentant, à titre d'exemples non limitatifs, plusieurs formes de réalisation possibles de la console qu'elle concerne.
La figure 1 en est une vue en perspective semi éclatée d'une première forme de réalisation, montrant deux types de chemins de câbles pouvant être montés sur la console;
la figure 2 en est une vue de côté montrant un chemin de câbles en tôle ajourée fixé sur la console;
la figure 3 en est une vue similaire à la figure 2, montrant un chemin de câbles de type filaire fixé sur la console;
la figure 4 en est une vue en perspective partiellement éclatée, illustrant une deuxième forme d'exécution de l'invention dans laquelle les deux éléments de fixation sont mobiles,
la figure 5 en est une vue en perspective montrant deux pièces correspondant au troisième élément, montées coulissantes dans un rail de la console,
la figure 6 en est une vue en perspective éclatée montrant le troisième élément en position sur un chemin de câble filaire et sur un chemin de câble en tôle ajourée,
la figure 7 en est une vue en coupe de profil, d'une forme d'exécution similaire à celle de la figure 4, le rail étant télescopique,
la figure 8 en est une vue de profil, illustrant une autre variante d'exécution de l'invention,
la figure 9 est une vue de profil d'un élément de fixation d'un chemin de câble destiné à être monté coulissant dans un rail de la console, et
la figure 10 est une vue agrandie partielle en perspective éclatée d'un support selon l'invention, illustrant la possibilité d'assembler différents types d'éléments de fixation.

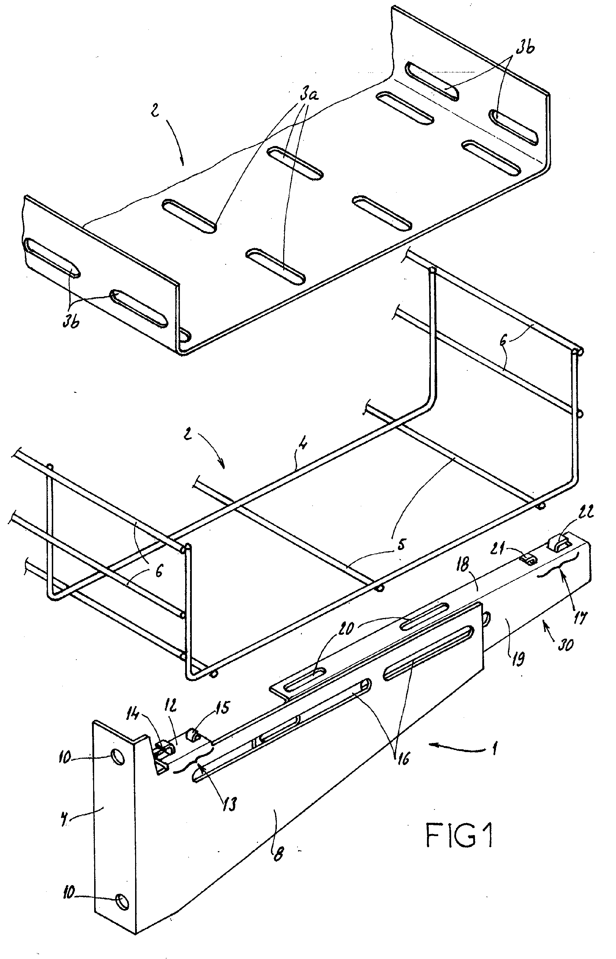

La figure 1 représente une console 1 permettant le montage d'un chemin de câbles sur une paroi à équiper, et un élément 2 de chemin de câbles formant, lorsqu'il est positionné en alignement avec d'autres éléments identiques, le chemin de câbles.

Comme illustré à la figure 1, l'élément de chemin de câble 2 - appelé également par extension dans la description qui suit "chemin de câble" - peut être de deux types différents: de type filaire, c'est-à-dire réalisé en un treillis de fils métalliques soudés entre eux, ou bien de type en tôle ajourée comportant des trous 3a de forme allongée sur sa paroi de fond, et également des trous 3b sur ses parois latérales.

L'élément de chemin de câble 2 lorsqu'il est de type filaire, est formé de fils métalliques assemblés, à savoir des fils transversaux 4 en forme de "U", des fils longitudinaux de fond 5 et des fils longitudinaux latéraux 6. Dans l'exemple représenté, l'élément 2 comprend deux fils longitudinaux latéraux 6 mais il existe des éléments de chemin de câbles de différentes largeurs selon la quantité de câbles concernée.

De manière similaire, les éléments de chemin de câble en tôle ajourée peuvent être de dimensions variables en fonction de la quantité de câbles à soutenir.

Plusieurs éléments 2 sont aboutés pour constituer le chemin de câbles, chaque élément 2 étant relié à un élément 2 consécutif au moyen de pièces d'assemblage ou d'éclisses, connues en elles-mêmes et donc non particulièrement décrites.

La console 1 comprend une partie de fixation 7 à un mur (ou paroi) ou sur un support, et une partie formant support de chemin de câbles 8. La console est formée par découpage et pliage d'un flan de tôle. La partie formant support de chemin de câbles 8 est horizontale et dirigée perpendiculairement au plan de la paroi. La partie de fixation 7 de la console 1 permet son montage sur la paroi à équiper grâce à deux trous 10 permettant le passage de vis (non illustrées) pour fixation dans la paroi.

Selon une première forme d'exécution de l'invention, telle que représentée à la figure 1, la partie formant support de chemin de câbles 8 comporte deux portions coulissantes l'une par rapport à l'autre, chacune comprenant un élément de fixation.

La première portion 29 de la partie formant support de chemin de câble 8, comporte sur une portion de sa longueur, un rebord horizontal 12 obtenu par pliage à partir du bord supérieur.

Ce rebord horizontal comporte un premier élément de fixation 13 d'un chemin de câble. Ce premier élément de fixation 13 comporte un ergot extérieur 14, dirigé vers la paroi, et propre à recevoir un fil longitudinal 5 du fond d'un chemin de câble filaire, et un ergot de fixation intérieur 15 dirigé du côté opposé à la paroi et propre à être fixé sur le bord d'un trou 3a du fond d'un chemin de câble en tôle ajourée.

Cette première portion 29 de la partie formant support de chemin de câbles 8 de la console 1, comporte en outre dans sa portion verticale, deux lumières allongées 16 disposées longitudinalement formant rails de guidage, dans lesquelles est fixé en coulissement une deuxième portion 30 de ladite partie formant support de chemin de câbles 8, ladite deuxième portion 26 comprenant un deuxième élément de fixation 17.

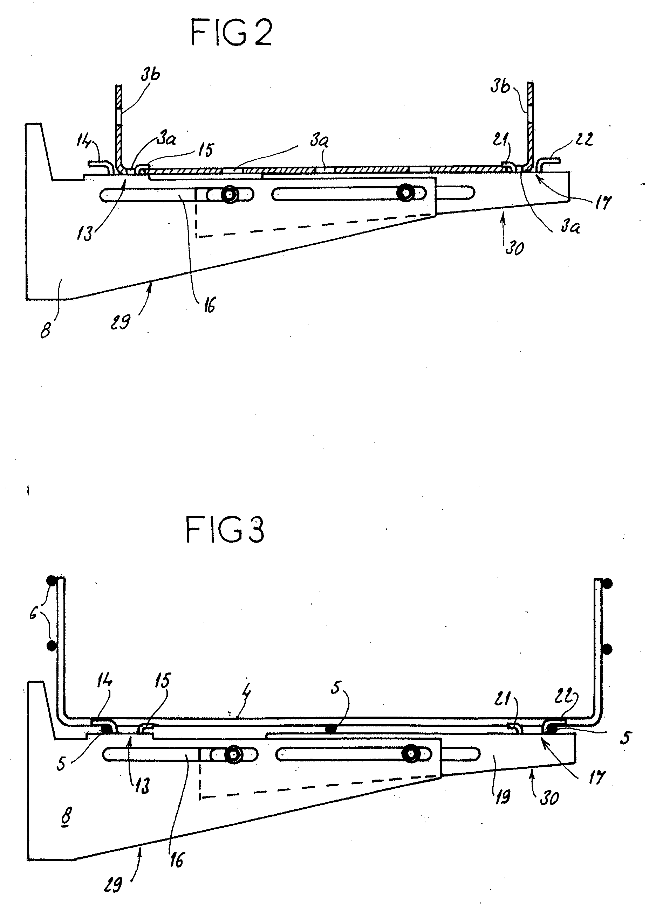

Comme cela est également représenté aux figures 2 et 3, les première 29 et deuxième 30 portions de la partie formant support de chemin de câbles 8, sont fixés en coulissement l'une par rapport à l'autre grâce à un système de vis et d'écrous.

Selon cette première forme d'exécution de l'invention, la deuxième portion 30 de la partie formant support de chemin de câbles 8, est formée par découpage et pliage d'un flan de tôle et comprend une partie horizontale 18 propre à recevoir le chemin de câbles, et une partie verticale 19 comportant des perforations permettant son montage en coulissement, par vis et écrous, sur la première portion 29 de la partie 8 formant support de chemin de câbles, comme illustré aux figures 1 à 3.

La partie horizontale 18 comprend deux lumières allongées 20, disposées selon l'axe longitudinal de la console et permettant, le cas échéant, le montage d'un troisième élément de fixation qui sera décrit plus en détail ci-après. La partie horizontale 18 comprend également un ergot de fixation intérieur 21 dirigé vers la paroi et propre à être fixé sur le bord d'un trou 3a du fond d'un chemin de câble en tôle ajourée, et un ergot de fixation extérieur 22 dirigé du côté opposé à la paroi et propre à recevoir un fil longitudinal 5 du fond d'un chemin de câble filaire.

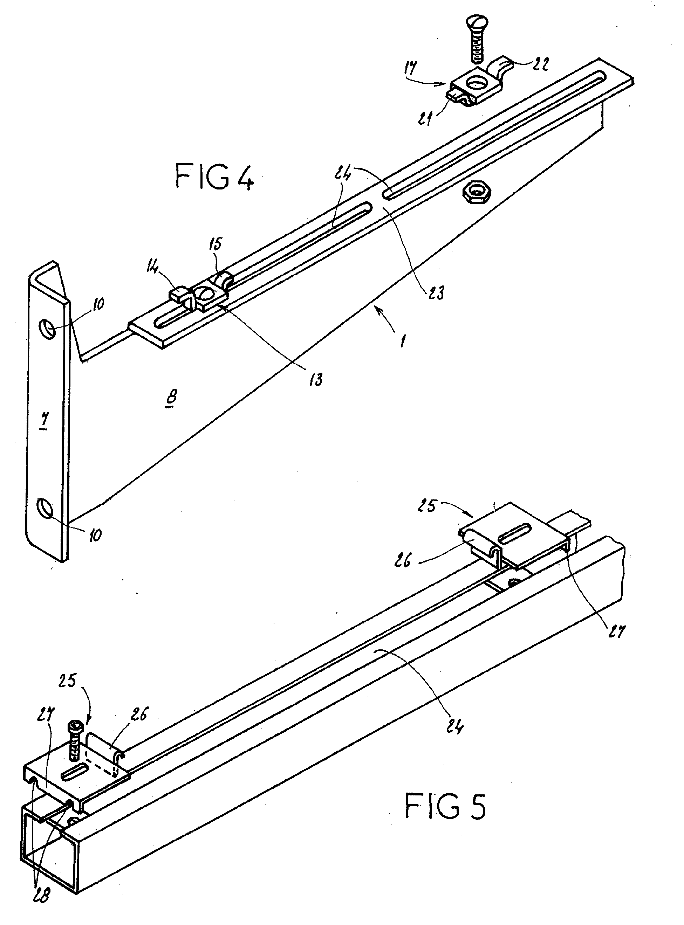

Selon une seconde forme d'exécution de l'invention, illustrée à la figure 4, la partie formant support de chemin de câbles 8 est formée intégralement d'un seul élément et comporte sur une portion de sa longueur, un rebord horizontal 23 obtenu par pliage à partir du bord supérieur de ladite partie formant support de chemin de câbles 8. Ce rebord horizontal comporte deux lumières allongées 24 formant rails de guidage.

Comme illustré à la figure 4, la partie formant support de chemin de câbles 8 comprend deux éléments de fixation (13, 17) de chemin de câbles, montés coulissants dans les lumières allongées 24 pour pouvoir s'adapter à la largeur du chemin de câble à installer.

Chacun de ces deux éléments de fixation comprend un ergot de fixation extérieur (14, 22) propre à recevoir un fil longitudinal 5 du fond d'un chemin de câble filaire, ainsi qu'un ergot de fixation intérieur (15, 21) propre à être fixé sur le bord d'un trou 3a du fond d'un chemin de câble en tôle ajourée, sont disposés sur le rebord 23.

Chacun des deux éléments de fixation (13, 17) est fixé à la console par un système vis-écrou, ce qui permet un réglage de la position de chacun de ces éléments de fixation, à tout moment.

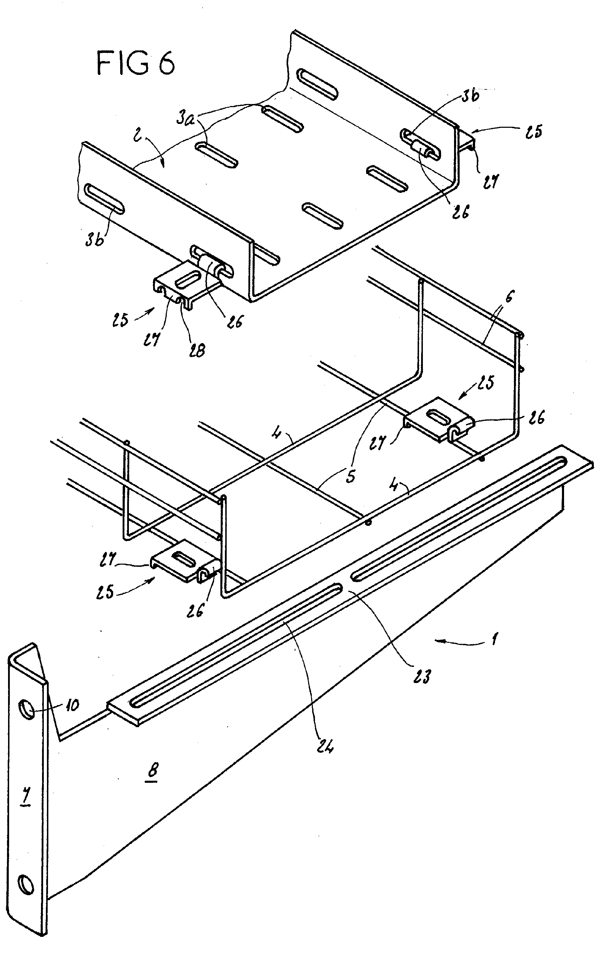

La présente invention prévoit également, de manière optionnelle, un troisième élément 25, tel qu'illustré aux figures 5 et 6.

Ce troisième élément 25 est mobile en translation et rotation le long d'une lumière allongée 24 de la console ou d'un rail de fixation, et comporte une portion horizontale munie d'un trou, pour sa fixation au rail formé par la lumière 24, grâce à un système vis-écrou.

Ce troisième élément comporte un ergot vertical 26 recourbé vers l'extérieur dudit troisième élément 25, destiné de préférence à être orienté perpendiculairement à la console comme illustré à la figure 5, et propre à permettre la fixation d'un chemin de câbles 2 en tôle ajourée, par prise sur le bord d'un trou 3b dudit chemin de câble en tôle ajourée situé sur une paroi latérale de ce dernier, comme montré à la figure 6.

Simultanément ou alternativement, le troisième élément 25 comporte un rebord vertical 27 dirigé vers le bas muni d'au moins une encoche 28 sur son bord inférieur, ladite encoche 28 pouvant recevoir un fil 5 du fond d'un chemin de câble filaire, pour fixation de ce dernier entre le troisième élément 25 et le rail de coulissement 24, comme montré à la figure 6.

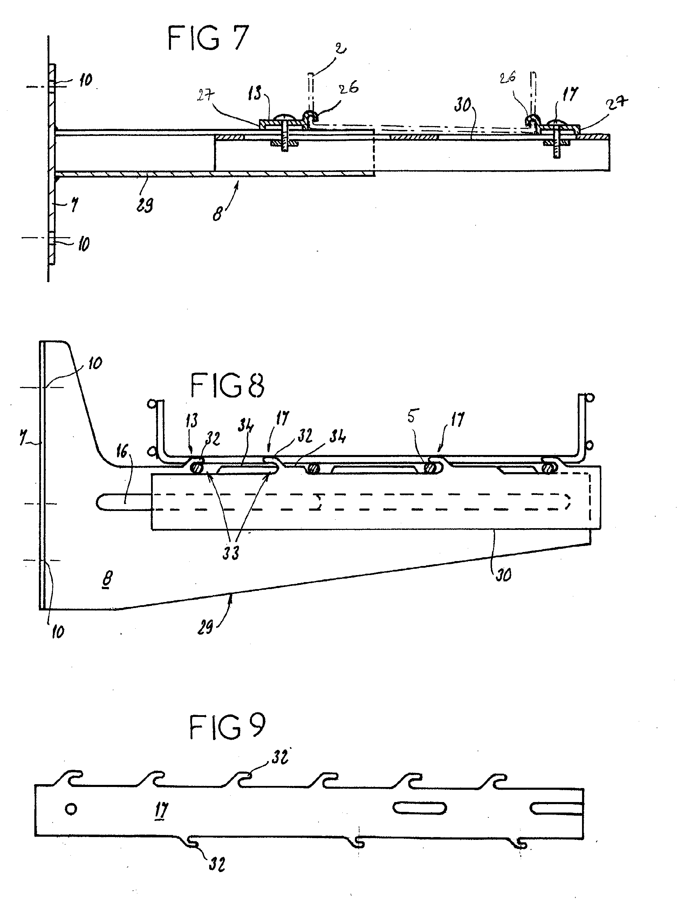

Selon une autre forme d'exécution de l'invention, telle que représentée à la figure 7, la partie formant support de chemin de câbles 8 comporte deux portions 29, 30 coulissantes l'une par rapport à l'autre, chacune comprenant un élément de fixation. L'une 30 de ces deux portions formant le support de chemin de câbles est de section extérieure sensiblement égale, aux jeux fonctionnels près, à la section intérieure de l'autre portion 29, comme cela est représenté à la figure 7.

La première portion 29 de la partie formant support de chemin de câble 8 comporte, au moins sur une portion de sa longueur, une lumière 31 disposée longitudinalement à la surface supérieure de ladite portion 29.

Cette lumière 31 comporte un élément de fixation 13 d'un chemin de câble en tôle ajourée ou filaire. Cet élément de fixation est similaire à l'élément de fixation 25 décrit ci-avant, et fixé à l'aide d'un système vis-écrou, comme représenté en coupe à la figure 7.

La deuxième portion 30 comprend un autre élément de fixation 17, pouvant convenir à la fixation de chemins de câbles de type filaire ou en tôle ajourée, également similaire à l'élément 25 décrit ci-avant en référence à la figure 5.

L'un des deux éléments de fixation 13 ou 17 est disposé dans la zone de recouvrement entre les deux portions 29 et 30 formant le support de chemin de câbles, comme cela est représenté à la figure 7, et sert donc également à fixer les deux portions 29, 30 l'une par rapport à l'autre.

Selon une autre variante d'exécution de l'invention représentée à la figure 8, la partie formant support de chemin de câbles 8 comporte deux portions 29, 30 coulissantes l'une par rapport à l'autre, chacune comprenant plusieurs éléments de fixation.

La première portion 29 de la partie formant support de chemin de câble 8, comporte sur une portion de sa longueur, une lumière longitudinale 16 disposée longitudinalement formant rail de guidage, dans laquelle est fixée en coulissement une deuxième portion (dite portion "libre") 30 de ladite partie formant support de chemin de câbles 8.

Les deux portions 29 et 30 comprennent chacune plusieurs éléments de fixation pouvant convenir à la fixation de chemins de câbles filaires ou à la fixation de chemins de câbles en tôle ajourée, ces élémnts de fixation 13, 17, étant respectivement intégralement formés avec les portions 29 et 30 formant support de chemin de câble.

Les éléments de fixation comportent chacun un ergot 32, ainsi qu'une première partie 33 en forme d'encoche permettant la fixation d'un fil d'un chemin de câble filaire, comme cela est représenté à la figure 8, et une seconde partie 34 en forme de plateau pouvant supporter le fond d'un chemin de câble en tôle ajourée après que l'ergot 32 ait été inséré dans un trou dudit chemin de câble en tôle ajourée (non représenté au dessin).

Cette variante d'exécution de l'invention présente l'avantage d'une structure simple, facile à fabriquer, par exemple par découpe au laser de flans de tôle, notamment pour la portion libre 30 du support de chemin de câble 8.

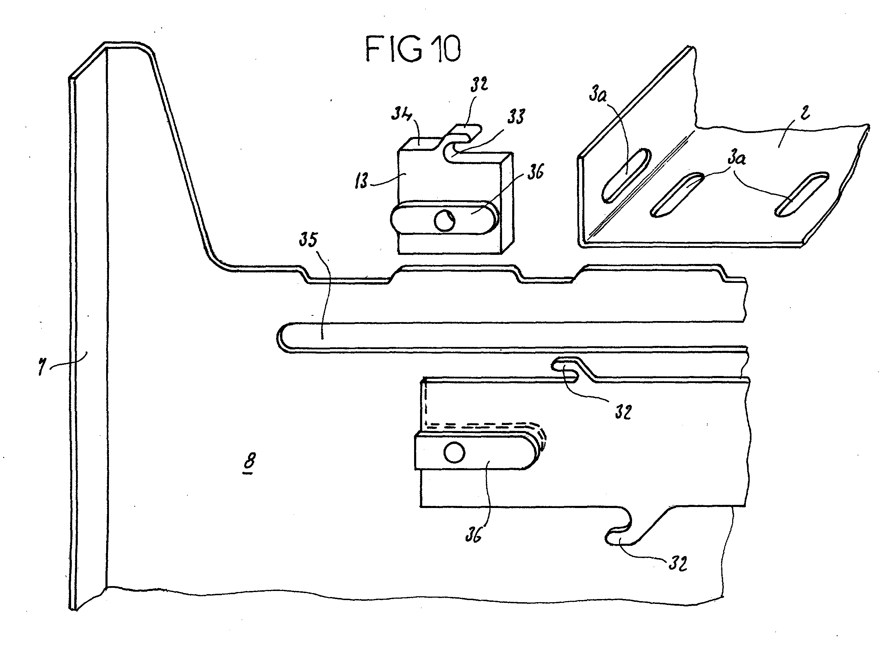

Selon une variante d'exécution représentée aux figures 9 et 10, le nombre d'ergots 32 à disposer sur la seconde portion 30 formant support de chemin de câble peut éventuellement être augmenté, notamment lorsque l'on souhaite accroître la stabilité de la fixation d'un chemin de câble sur le support 8.

Or, le pas entre deux fils d'un chemin de câble filaire standard, et le pas entre deux trous d'un chemin de câble en tôle ajourée standard sont différents, et les ergots nécessaires à la fixation des deux types de chemins de câbles sont alors progressivement décalés le long du support de chemin de câbles 8. Ainsi, il est apparu que lorsque le nombre de points de fixation sur le support de chemin de câble est supérieur à 3, il n'est plus possible d'utiliser la forme d'exécution de l'invention représentée à la figure 8.

Dans ce cas, la partie formant support de chemin de câbles est formée intégralement d'un seul élément, comme cela a été décrit précédemment pour la forme d'exécution représentée à la figure 4, et comporte sur une portion de sa longueur une lumière allongée 35 formant rail de guidage, comme cela est représenté à la figure 10. Cette partie formant support 8 est munie d'un premier élément de fixation 13 permettant la fixation d'un support de chemin de câbles filaire ou en tôle ajourée. Ce premier élément de fixation 13 peut être intégralement formé avec ladite partie formant support 8, comme cela a déjà été décrit en référence à la figure 8. Alternativement, et comme cela est représenté à la figure 10, le premier élément de fixation 13 peut être un élément rapporté indépendant qui est monté coulissant dans la lumière 35, et fixé dans cette dernière à l'aide d'un système vis-écrou (non représenté au dessin).

Comme cela est représenté à la figure 10, un second élément de fixation 17 de forme allongée est prévu, dont la position est réglable le long de la lumière 35. Ce second élément de fixation 17 comporte plusieurs ergots 32 correspondant aux deux types de consoles de chemin de câble (filaire et en tôle ajourée), sur ses deux tranches opposées. Les ergots 32 de plus grande taille sont destinés à la fixation de chemins de câbles de type filaire et sont disposés le long d'une tranche longitudinale dudit élément de fixation 17, et les ergots 32 de plus petite taille, situés sur l'autre tranche longitudinale de l'élément 17, sont destinés à la fixation de chemins de câble en tôle ajourée. Cet élément de fixation 17 comporte donc des parties permettant la fixation de chemins de câble de type filaire ou en tôle ajourée, et doit être utilisé dans un cas ou dans l'autre par pivotement de 180°.

Avantageusement, les éléments de fixation 13 et 17 destinés à être fixés dans la lumière 35 du support 8 comprennent une partie latérale longitudinale en relief, disposée horizontalement, dont la hauteur correspond, aux jeux fonctionnels près, à la hauteur de la lumière 35 du support 8. Cette partie 36 en relief permet de guider le positionnement correct des éléments de fixation 13, 17, en coulissement dans la lumière 35 du support 8, au moment où l'on souhaite régler leur position dans la lumière 35.

Il ressort de ce qui précède, que l'invention apporte une amélioration déterminante à la technique antérieure, en fournissant une console universelle n'impliquant pas de modifications substantielles pour pouvoir s'adapter à la fixation de chemins de câbles de structures différentes.

Il va de soi que l'invention n'est pas limitée à la forme de réalisation décrite ci-dessus à titre d'exemple mais qu'elle en embrasse au contraire toutes les variantes de réalisation entrant dans le champ de protection défini par les revendications ci-annexées.

## Revendications

1. Console (1) de support de chemin de câbles (2), comprenant au moins une pièce, destinée à être fixée à une paroi à équiper, **caractérisée en ce que** la console comporte une partie de fixation (7) au mur ou sur un support, une partie de support de chemin de câble (8) et au moins deux éléments de fixation (13, 17) d'un chemin de câble, chaque élément étant placé de manière à ce que sa distance par rapport à l'autre élément soit réglable, chaque élément comportant deux parties destinées respectivement à la fixation d'un fil longitudinal (5) du fond d'un chemin de câble filaire, et d'un chemin de câble en tôle ajourée après avoir traversé un trou (3a) de celui-ci.

2. Console (1) selon la revendication 1, **caractérisée en ce que** chaque élément de fixation (13, 17) comporte deux ergots (14, 15 ; 21, 22), l'un dirigé vers la paroi, l'autre orienté dans la direction opposée.

3. Console (1) selon la revendication 1, **caractérisée en ce que** au moins un des éléments de fixation (13, 17) est mobile en translation et rotation par rapport à la console, ledit élément de fixation comportant un ergot vertical (26) recourbé vers l'extérieur et propre à permettre la fixation d'un chemin de câbles (2) en tôle ajourée par prise sur le bord d'un trou dudit chemin de câble en tôle ajourée situé sur une paroi latérale de ce dernier, et/ou ledit élément de fixation (13, 17) comportant un rebord vertical (27) dirigé vers le bas muni d'au moins une encoche (28) sur son bord inférieur, ladite encoche pouvant recevoir un fil (5) du fond d'un chemin de câble filaire, pour fixation de ce dernier sur la console.

4. Console (1) selon les revendications 1 à 3, **caractérisée en ce que** la partie de support de chemin de câble (8) de la console comporte au moins une lumière allongée (16), disposée longitudinalement à la console, dans laquelle au moins un élément de fixation (17) est monté de façon réglable.

5. Console (1) selon les revendications 1 à 4, **caractérisée en ce que** la partie de support de chemin de câble (8) de la console comporte deux portions (29, 30) coulissantes l'une par rapport à l'autre, chacune comprenant un élément de fixation.

6. Console (1) selon les revendications 1 à 4, **caractérisée en ce que** les deux éléments de fixation (13, 17) sont montés de façon réglable dans ladite au moins une lumière allongée longitudinale (16).

7. Console (1) selon les revendications 1 à 6, **caractérisée en ce que** l'un des deux éléments de fixation (13) est solidaire ou fait partie intégrante de la console (1).

8. Console (1) selon les revendications 1 à 7, **caractérisée en ce qu'**elle comporte en outre un troisième élément (25) mobile en translation et rotation par rapport à la console, le troisième élément (25) comportant un ergot vertical (26) recourbé vers l'extérieur et propre à permettre la fixation d'un chemin de câbles (2) en tôle ajourée par prise sur le bord d'un trou (3b) dudit chemin de câble en tôle ajourée situé sur une paroi latérale de ce dernier, et/ou ledit troisième élément (25) comportant un rebord vertical (27) dirigé vers le bas muni d'au moins une encoche (28) sur son bord inférieur, ladite encoche pouvant recevoir un fil (5) du fond d'un chemin de câble filaire, pour fixation de ce dernier sur la console.
